(19)

**Europäisches Patentamt**
**European Patent Office**
**Office européen des brevets**

(11)  **EP 4 134 876 B1**

(12)  **EUROPEAN PATENT SPECIFICATION**

(45) Date of publication and mention
of the grant of the patent:
**03.12.2025  Bulletin 2025/49**

(21) Application number: **21306107.0**

(22) Date of filing: **09.08.2021**

(51) International Patent Classification (IPC):
***G06N 3/084*** (2023.01)      ***G06N 3/065*** (2023.01)
***G06N 3/082*** (2023.01)

(52) Cooperative Patent Classification (CPC):
**G06N 3/084; G06N 3/065; G06N 3/082;**
G06N 3/044

(54) **METHOD AND DEVICE FOR HEBBIAN MASKED MACHINE LEARNING**

VERFAHREN UND VORRICHTUNG ZUM HEBBSCHEN MASKIERTEN MASCHINELLEN LERNEN

PROCÉDÉ ET APPAREIL D'APPRENTISSAGE AUTOMATIQUE MASQUÉ DE HEBB

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**

(43) Date of publication of application:
**15.02.2023  Bulletin 2023/07**

(73) Proprietor: **Commissariat à l'Energie Atomique et
aux Energies
Alternatives
75015 Paris (FR)**

(72) Inventor: **DALGATY, Thomas
91191 Gif-sur-Yvette Cedex (FR)**

(74) Representative: **Cabinet Beaumont
4, Place Robert Schuman
B.P. 1529
38025 Grenoble Cedex 1 (FR)**

(56) References cited:
**US-A1- 2021 182 683**

• WOOD R J ET AL: "A NEURAL NETWORK THAT
USES A HEBBIAN/BACKPROPAGATION HYBRID
LEARNING RULE", PROCEEDINGS OF THE
INTERNATIONAL JOINT CONFERENCE ON
NEURAL NETWORKS. (IJCNN). BALTIMORE,
JUNE 7 - 11, 1992; [PROCEEDINGS OF THE
INTERNATIONAL JOINT CONFERENCE ON
NEURAL NETWORKS. (IJCNN)], NEW YORK,
IEEE, US, vol. 3, 7 June 1992 (1992-06-07), pages
863 - 868, XP000340455, ISBN:
978-0-7803-0559-5, DOI: 10.1109/
IJCNN.1992.227091
• GUPTA MANAS ET AL: "HebbNet: A Simplified
Hebbian Learning Framework to do Biologically
Plausible Learning", ICASSP 2021 - 2021 IEEE
INTERNATIONAL CONFERENCE ON
ACOUSTICS, SPEECH AND SIGNAL
PROCESSING (ICASSP), IEEE, 6 June 2021
(2021-06-06), pages 3115 - 3119, XP033955499,
DOI: 10.1109/ICASSP39728.2021.9414241
• PAWEL LADOSZ ET AL: "Deep Reinforcement
Learning with Modulated Hebbian plus Q
Network Architecture", ARXIV.ORG, CORNELL
UNIVERSITY LIBRARY, 201 OLIN LIBRARY
CORNELL UNIVERSITY ITHACA, NY 14853, 21
September 2019 (2019-09-21), XP081480101

**Description**

Technical field

The present disclosure relates generally to the field of artificial neural networks, and in particular to devices and methods for Hebbian-based machine learning.

Background art

Artificial neural networks (ANN) are computing architectures that are developed to mimic, to a certain extent, neuro-biological systems. Such neural networks generally comprise a network of artificial neurons, which receive inputs, combine these inputs with their internal state and often with a threshold, and produce an output signal. Outputs of neurons are coupled to the inputs of other neurons by connections, which are referred to as synapses, their equivalent in the biological brain.

The synapses generally perform some processing of the signals conveyed between the neurons. For example, each synapse stores a gain factor, or weight, which is applied to the signal from the source neuron in order to increase or decrease its strength, before it is conveyed to one or more post-synaptic neurons. The synapses between each layer of neurons of the ANN are generally implemented by a matrix multiplication or dot/inner product calculation.

Training of neural networks involves starting with a neural network model in an initialized state, for example having its weights set to random values. Data points of a training dataset are then forward propagated, generally in batches, through the network to generate output values. The output values are then compared to a ground truth using a loss function, and error gradients are backpropagated through the network in order to update the parameters of the model. This process is generally repeated hundreds of thousands or even millions of times, until the error has been reduced to an acceptable level, and the neural network is able to relatively accurately reproduce a desired behavior. Once trained, the neural network may be used only for inference, or in some cases it may continue to learn, for example in the case of continuous learning applications.

Neural networks may be implemented by dedicated hardware circuits, or in software. Whatever the implementation, the complexity of the trained neural network, and in particular the number of layers, the number of neurons in each layer, and the number of synapses with their associated weights, has a direct impact on the amount of processing resources required to implement the network. In particular, the greater the complexity, the greater the chip area and power consumption of the implementation of the neural network.

The publication: WOOD R J ET AL: "A NEURAL NETWORK THAT USES A HEBBIAN/ BACKPROPAGATION HYBRID LEARNING RULE", PROCEEDINGS OF THE INTERNATIONAL JOINT CONFERENCE ON NEURAL NETWORKS. (IJCNN). BALTIMORE, JUNE 7 - 11, 1992; PROCEEDINGS OF THE INTERNATIONAL JOINT CONFERENCE ON NEURAL NETWORKS, NEW YORK, IEEE, vol. 3, 7 June 1992 (1992-06-07), pages 863-868, relates to a Hebbian/backpropagation learning rule.

Known training methods tend to lead to overly complex models, and there is a technical problem in providing a system and method for training a neural network that addresses this issue.

Summary of Invention

It is an aim of embodiments of the present disclosure to at least partially address one or more problems in the prior art.

The invention is defined by the appended set of claims.

Brief description of drawings

The foregoing features and advantages, as well as others, will be described in detail in the following description of specific embodiments given by way of illustration and not limitation with reference to the accompanying drawings, in which:

Figure 1 is a graph illustrating a problem of overfitting during neural network training;

Figure 2 is a graph illustrating a problem of catastrophic forgetting during neural network training;

Figure 3 schematically illustrates a neural network according to an example embodiment;

Figure 4 schematically illustrates a training system for a neural network according to an example embodiment;

Figure 5 is a flow diagram illustrates operations in a method of training a neural network according to an example embodiment;

Figure 6 schematically illustrates a computing system implementing a neural network according to an example embodiment of the present disclosure;

Figure 7 schematically illustrates a synapse network providing a hardware implementation of synapses between two layers of a neural network according to an example embodiment of the present disclosure;

Figure 8 schematically illustrates a circuit for storing a synapse value of a Hebbian matrix according to an example embodiment of the present disclosure;

Figure 9 schematically illustrates a circuit for storing a synaptic weight according to an example embodiment of the present disclosure;

Figure 10 schematically illustrates a hardware system according to an example embodiment of the present disclosure;

Figures 11 to 13 are graphs representing probability densities of weights of three layers of a neural network with and without the use of Hebbian matrices; and

Figure 14 is a graph illustrating accuracy of a neural network against the percentage of pruned weights for a neural network with and without the use of Hebbian matrices.

Description of embodiments

Like features have been designated by like references in the various figures. In particular, the structural and/or functional features that are common among the various embodiments may have the same references and may dispose identical structural, dimensional and material properties.

For the sake of clarity, only the operations and elements that are useful for an understanding of the embodiments described herein have been illustrated and described in detail. In particular, techniques for training an artificial neural network, based for example on minimizing an objective function such as a loss function, are known to those skilled in the art, and will not be described herein in detail.

Unless indicated otherwise, when reference is made to two elements connected together, this signifies a direct connection without any intermediate elements other than conductors, and when reference is made to two elements coupled together, this signifies that these two elements can be connected or they can be coupled via one or more other elements.

In the following disclosure, unless indicated otherwise, when reference is made to absolute positional qualifiers, such as the terms "front", "back", "top", "bottom", "left", "right", etc., or to relative positional qualifiers, such as the terms "above", "below", "higher", "lower", etc., or to qualifiers of orientation, such as "horizontal", "vertical", etc., reference is made to the orientation shown in the figures.

Unless specified otherwise, the expressions "around", "approximately", "substantially" and "in the order of" signify within 10 %, and preferably within 5 %.

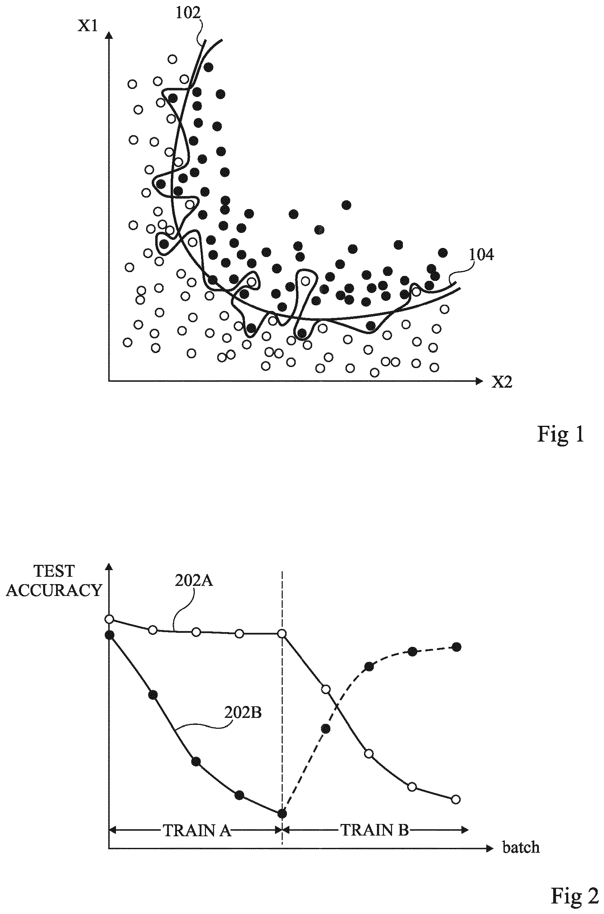

The present inventor has observed that the training of artificial neural networks can lead to problems of over-parameterization, meaning that there are more synapses than the number needed to implemented the given function. Furthermore, the training of artificial neural networks can also lead to problems of overfitting and catastrophic forgetting, as will now be described with reference to Figures 1 and 2.

Figure 1 is a graph illustrating a problem of overfitting during neural network training. In particular, Figure 1 shows an example of an input space having variables X1 (y axis) and X2 (x axis), and data points within this input space represented by hollow and solid dots. The neural network is trained to classify the data points, with the data points represented by the hollow dots falling within a first class, and the data points represented by the solid dots falling within a second class. There is, in practice, not a clearly defined boundary between the classes, and for most applications it is desired that the neural network learns an approximate and relatively smooth boundary represented by a curve 102. However, when a complex neural network is trained, it is possible that the solution becomes overly complex, as represented by the curve 104, which is generally undesirable.

Figure 2 is a graph illustrating a problem of catastrophic forgetting during neural network training. In particular, Figure 2 represents the test accuracy (TEST ACCURACY) of the network output during the training based on a first group of training batches (TRAIN A) comprising training data points falling within a class A, and during the subsequent training based on a second group of training batches (TRAIN B) comprising training data points falling within a class B. A curve 202A represents the test accuracy associated with input data points of class A, and a curve 202B represents the test accuracy associated with input data points of class B. It is assumed that initially the network has been trained to provide relatively high test accuracy for both of the classes A and B. It can be seen that during a subsequent training based on the first group of class A batches, the test accuracy associated with class A remains relatively high, but the test accuracy associated with the class B drops due to catastrophic forgetting. In particular, during the training of the class A data points, the network forgets what it had learnt concerning class B. Similarly, during the subsequent training based on the second group of class B batches, the test accuracy associated with class B increases again. However, the loss associated with the class A drops due to catastrophic forgetting. In particular, during the training of the class B data points, the network forgets what it had learnt concerning class A.

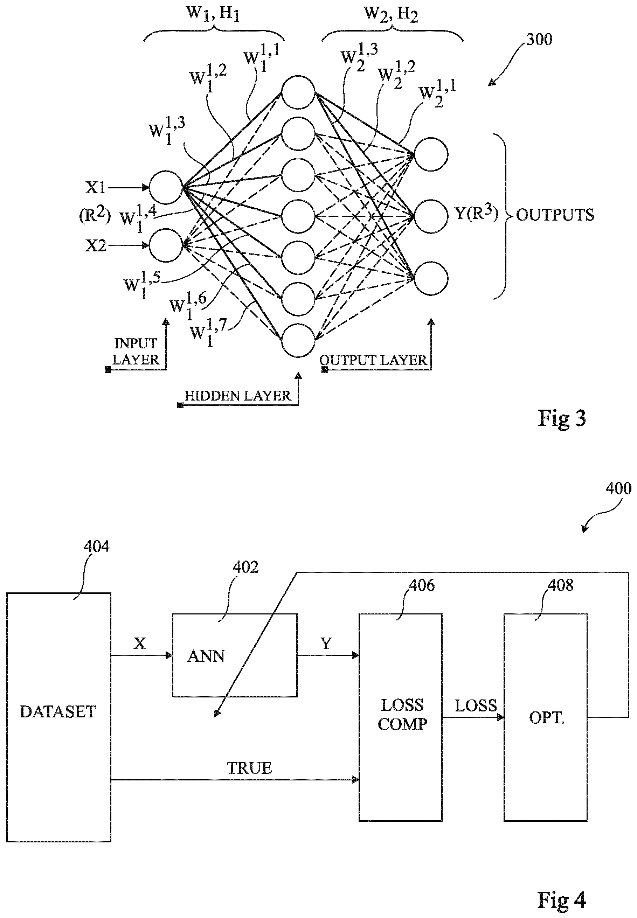

Figure 3 schematically illustrates a neural network 300 according to an example in which it is implemented by a multi-layer perceptron DNN (deep neural network) architecture.

The DNN architecture 300 according to the example of Figure 3 comprises three layers, in particular an input layer (INPUT LAYER), a hidden layer (HIDDEN LAYER), and an output layer (OUTPUT LAYER). In alternative embodiments, there could be more than one hidden layer. Each layer for example comprises a number of neurons. For example, the DNN architecture 300 defines a neural network model with a two-dimensional data space, and there are thus two visible neurons in the input layer receiving the corresponding values X1 and X2 representing the input X. The model has a hidden layer with seven output hidden neurons, and thus corresponds to a matrix of dimensions $\mathbb{R}^{2*7}$. In the example of Figure 3, there are three neurons in the output layer, providing an output Y of the DNN 300.

The function $Y = \Pi_\theta(X)$ applied by the DNN architecture 300 is for example a functions aggregation, comprising an associative function $g_n$ within each layer, these functions being connected in a chain to map $Y = \Pi_\theta(X) = g_n(... (g_2(g_1(X))...))$. There are just two such functions in the simple example of Figure 3, corresponding to those of the hidden layer and the output layer.

An output of each neuron of each layer n, except the output layer, is coupled to each neuron of the subsequent layer via a corresponding synapse, the synapses of each layer n being associated with synaptic weight matrix $W_n$ and a Hebbian matrix $H_n$. Each Hebbian matrix $H_n$ is for example of the same dimensions as the corresponding synaptic weights matrix $W_n$. In Figure 3, the synapses between the input layer and the hidden layer are associated with a synaptic weight matrix $W_1$ and a Hebbian matrix $H_1$, and the synapses between the hidden layer and the output layer are associated with a synaptic weight matrix $W_2$ and a Hebbian matrix $H_2$. More generally, each neuron i of each layer n-1 of the DNN 300 is coupled to each neuron j of the next layer n via a corresponding synapse, associated with a synaptic weight $W_n^{i,j}$ of the synaptic weight matrix $W_n$ and a Hebbian value $H_n^{i,j}$ of the Hebbian matrix $H_n$.

The values $H_n^{i,j}$ of the Hebbian matrices $H_n$ each indicate the value of a co-activation function between the activation of the pre-synaptic neuron i of the layer n-1 and the post-synaptic neuron j of the layer n. According to the embodiments described herein, these values are used to determine whether or not the associated weight should be updated using the gradient backpropagated through the network. In some embodiments, the Hebbian matrices $H_n$ are in the form of Hebbian gradient masks, which are for example binary or ternary masks, as will be described in more detail below.

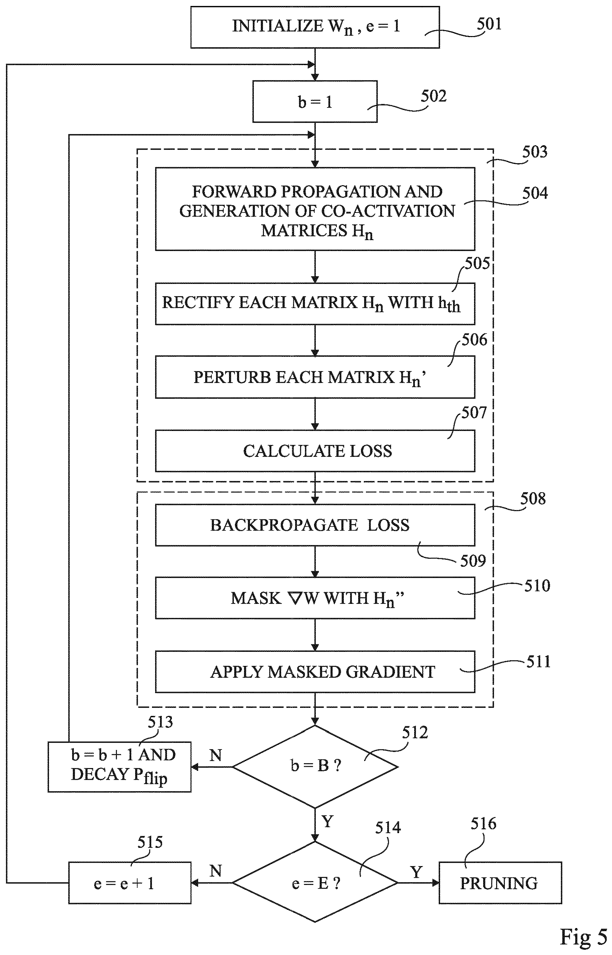

Figure 4 schematically illustrates a training system 400 for a neural network according to an example embodiment. The system 400 comprises an artificial neural network (ANN) 402, which is for example implemented according to the example of Figure 3, although it could also be implemented by a different type of ANN. The ANN 402 receives input data points X from a data storage device 402. For example, the data storage device stores a dataset (DATASET) formed of batches of training data, the training data comprising the input data points X, and corresponding ground truths (TRUE). The ANN 402 processes the input data points X, for example in batches, and generates one or more output values Y. The one or more output values Y, and the corresponding ground truth TRUE, are provided to a loss computation module 406 (LOSS COMP), which is configured to calculate a loss (LOSS) based on an error between the one or more output values Y and the ground truth TRUE. The loss is for example provided to an optimization module (OPT) 408, which is for example configured to generate digital gradient values, which are back-propagated through the network 402 in order to update the synaptic weights of the network. However, as will be described in more detail below, according to the embodiments described herein, the Hebbian gradient mask is applied in order to prevent updating of one or more of the weights, as will be described in more detail with reference to Figure 5.

Figure 5 is a flow diagram illustrating operations in a method of training a neural network according to an example embodiment of the present disclosure. This method is for example implemented by the training system 400 of Figure 4.

In an operation 501 (INITIALIZE $W_n$, e=1), a weights matrix $W_n$ of each layer of the neural network 402 is for example initialized, for example at random values, at intermediate values, or at relatively low values, and a count value e is for example set to 1. The count value e for example represents the number of times the epoch is used, the epoch corresponding for example to the entire training dataset. For example, the training dataset is to be applied E times to the neural network during the learning process, where E is an integer equal to 1 or more.

In an operation 502 (b=1), a count value b is for example set to 1, this count value for example representing the current batch of the dataset that is being processed. For example, the dataset is divided into batches, each batch comprising a subdivision of the dataset consisting of one or more data points that are applied to the network to generate a set of one or more output values. For example, all of the batches are of equal size to each other. The dataset for example comprises a plurality of batches, and for example thousands or millions of batches.

After operations 501 and 502, a network evaluation phase 503 is for example performed in which a batch b of training data points is applied to the neural network, a loss value is generated based on the output of the neural network, and the Hebbian matrices are generated. For example, the network evaluation phase comprises operations 504, 505, 506 and 507.

In the operation 504 (FORWARD PROPAGATION AND GENERATION OF CO-ACTIVATION MATRICES $H_n$), input data X of a training data point is forward propagated through the network, and causes an output value Y to be generated and stored. This is repeated for each training data point of the batch. During the forward propagations of the training data points, the Hebbian matrix $H_n$ of each layer n of the network is for example generated. This involves calculating, based on the neuron outputs for all of the P data points of the batch, the mean absolute co-activation of the pairs of pre-synaptic and post-synaptic neurons of the layers n-1 and n of the network. For example, this operation is performed by applying the following equation (equation 1):

[Math 1]

$$H_n = \frac{1}{P} \sum_{p=1}^{P} \left| a_{n,p} \cdot a_{n-1,\mathrm{p}}^{T} \right|$$

where p is the index of the data point, there being P data points in each batch, $a_{n,p}$ is the array of activations, for data point p, of the neurons of the layer n, and $a_{n-1,p}$ is the array of activations, for data point p, of the neurons of the layer n-1. In this example, the absolute value of the mean co-activation is taken, such that the sign of the result is ignored. Of course, rather than using a mean average of the coactivations, another type of average could be used, such as a median or mode average.

As known by those skilled in the art, the activation of a neuron in a neural network implies the generation of an output value as a function of its inputs. In particular, an activation function is associated with each neuron, which defines the level at which the neuron will be activated for a given set of inputs. During forward propagation in the network, some neurons are activated at higher levels than others.

In the case of neuron networks having "static" models, in other words where time is not represented, the activation of neurons for example results in the generation, by the neuron, of a constant output value. Depending on the activation function applied by the neurons of the network, the output value generated by activation of the neuron is in some cases always a positive value, whereas in other cases it can be a positive or negative value. In either case, the co-activation of the pre-synaptic and post-synaptic neurons is for example based on the product of the output values of the neurons.

In some cases where the neural network has a temporal dimension to its behavior, such as in the case that the neural network is a recurrent neural network model, the Hebbian matrix value is for example a running average of co-activations instead of an instantaneous average value. In particular, the Hebbian matrix value is for example calculated based on the following differential equation (equation 2):

[Math 2]

$$H_n = \frac{dH_n}{dt} = \frac{\left| a_n \cdot a_{n-1}^{T} \right| - H_n}{\tau}$$

where $\tau$ is the decay time constant of the correlation. In such a model, the outputs of the neurons evolve over several time steps, and the optimization algorithm for example uses a backpropagation through time. For example, a matrix of $H_n$ with a time dimension is recorded, the matrix comprising one Hebbian mask for each time step, based on the same mask generation procedures as described above. In other words, the matrix $H_n$ according to equation 2 containing continuous values is generated at each time step, and then, once the final time step has been processed, the continuous values associated with each time step are for example used to generate the Hebbian mask for each time step. This allows Hebbian masked gradients to be applied in each unrolled time step as a function of the co-activation of each timestep.

Rather than recording a matrix of $H_n$ with a time dimension, it would also be possible to treat each time step individually according to the procedure described above. For example, this involves recording the matrix of $H_n$ at each timestep based on equation 1, without the incorporation of the co-activation history as defined by equation 2.

In the operation 505 (RECTIFY EACH MATRIX $H_n$ WITH $h_{th}$), each Hebbian matrix $H_n$ is for example transformed into a Hebbian gradient mask $H_n'$ by comparing each Hebbian value with one or more thresholds. For example, a binary Hebbian gradient mask $H_n'$ is generated by comparing the co-activation values $|a_n \cdot a_{n-1}^T|$ with a threshold based on the following equation:

[Math 3]

$$H_n' = (|a_n \cdot a_{n-1}^T| > h_{th})$$

where $h_{th}$ is the threshold. Thus, for each co-activation value that is greater than the threshold $h_{th}$, the corresponding value of the Hebbian binary mask $H_n'$ is for example a binary "1", where for each co-activation value that is equal to or less than the threshold $h_{th}$, the corresponding value in the Hebbian gradient mask $H_n'$ is for example set to a binary "0".

The value of the threshold $h_{th}$ is for example chosen such that the number of masked synapses is equal to between 1 and 50 percent of the number of weights in the network, and for example to between 5 and 20 percent of the number of weights of the network. According to another approach, the threshold $h_{th}$ is chosen as a percentage of the maximum value of the co-activation. For example, in the case Sigmoid functions are used as the activation function, then the minimum and maximum coactivation values $a_n \cdot a_{n-1}^T$ will be 0 and 1 respectively. Thus, setting the threshold $h_{th}$ to around 0.5 would imply that the weights of synapses having coactivations of over around 50% of the maximum will be updated.

In alternative embodiments, rather than using the absolute function, another function K() could be applied to the coactivations and compared with one or more thresholds in order to generate the Hebbian mask $H_n'$. Thus, the Hebbian mask $H_n'$ is determined as follows:

[Math 4]

$$H_n' = (K(a_n \cdot a_{n-1}^T) > h_{th})$$

where K is for example a function resulting in a positive result, such as the absolute function, the square, or other even power. As a further example, a sigmoid function could be used in order to redistribute values between known or workable limits. For example, highly anti-correlated synapses may have values very close to zero, and highly correlated synapses may have values very close to one.

Furthermore, rather than being a binary Hebbian mask that causes each weight to be either updated or not updated, in alternative embodiments, the Hebbian mask $H_n'$ could provide more than binary options. For example, in some embodiment, the Hebbian mask is a ternary mask, each value for example being at 1, 0 or -1. The value of 1 for example indicates correlation between the activations, and causes the weight to be updated by preserving the gradient, the value of 0 for example indicates a lack of correlation between the activations, and the weight is not updated by masking the gradient, and the value of -1 for example indicates anti-correlation between the activations, and the causes the weight to be updated based on a reversed direction of the gradient. By reverse direction of the gradient, this implies a change of sign of the gradient, a positive gradient becoming a negative gradient, and vice versa.

For example, the Hebbian ternary mask $H_n'$ is generated based on the following subtraction of two comparisons:

[Math 5]

$$\boldsymbol{H_n} = (\boldsymbol{a_n} \cdot \boldsymbol{a_{n-1}}^T > \boldsymbol{h_{th1}}) - (\boldsymbol{a_n} \cdot \boldsymbol{a_{n-1}}^T < \boldsymbol{h_{th2}})$$

where $\boldsymbol{h_{th1}}$ and $\boldsymbol{h_{th2}}$ are different thresholds, with $h_{th1} > h_{th2}$, and each comparison for example equals 1 if true and 0 if false. Thus, when the coactivation is greater than $h_{th1}$, the corresponding value of the Hebbian matrix $H_n$ is equal to 1, when the coactivation is lower than $h_{th2}$, the corresponding value of the Hebbian matrix $H_n$ is equal to -1, and when the coactivation is between $h_{th2}$ and $h_{th1}$, the corresponding value of the Hebbian matrix $H_n$ is equal to 0. In the case that the activation values $a_n$ and $a_{n-1}$ may be positive or negative, the threshold $h_{th2}$ is for example a negative threshold, which may or may not have the same absolute value as the threshold $h_{th1}$.

In the operation 506 (PERTURB EACH MATRIX $H_n'$), the Hebbian gradient mask $H_n'$ of each layer is for example perturbed in order to generate a perturbed Hebbian gradient mask $H_n''$. For example, a Bernoulli permutation is applied. This for example involves subtracting from each mask $H_n'$ a matrix of uniform random values according to the following

equation:

[Math 6]

$$H_n'' = \left| H_n' - U(p_{flip}) \right|$$

where $U(p_{flip})$ is the matrix of uniform random values, and $p_{flip}$ is the probability of the cells being at 1, which causes the corresponding value of the mask $H_n'$ to be flipped. In one embodiment, the probability $p_{flip}$ is equal to between 0.01 and 0.2, and for example to around 0.1.

In alternative embodiments, it would also be possible to omit the operation 506, and to use the unperturbed Hebbian gradient mask $H_n'$.

In the operation 507 (CALCULATE LOSS), the loss is for example calculated based on the ground truths for each data point of the batch b, and based on a given error metric. For example, the loss is based on an error calculated for each data point equal to $|Y - Y_{TRUE}|$ where $Y$ is the output of the neural network resulting from the forward propagation of the data point during operation 504, and $Y_{TRUE}$ is the corresponding ground truths of the data point. The loss for the batch b is for example calculated as a mean value of the loss, such as the Mean Square Error (MSE). In some embodiments, the loss is also calculated based on the Euclidean norm, also known as the L2-norm, of the synaptic weights of the matrix. For example, the calculation of the loss includes an L2-norm term, equal for example to a sum of the squared value of the weights, that is summed with the other terms. In this way, certain weights associated with neurons having co-activations over the threshold, as determined by the Hebbian mask, will decay to zero.

After the network evaluation phase 503, a weight matrix update phase 508 is for example implemented, comprising operations 509, 510 and 511. For example, the weights matrix is updated based on a Stochastic Gradient Descent learning technique.

In the operation 509 (BACKPROPAGATE LOSS), the loss generated in operation 507 is for example back-propagated through the network in order to generate gradients $\nabla W = \dfrac{\partial loss}{\partial W}$ for each layer n of the network.

In the operation 510 (MASK $\nabla W$ WITH $H_n''$), the gradients $\nabla W_n$ of each layer n of the network are for example masked with the corresponding perturbed Hebbian gradient mask $H_n''$ generated in the operation 506. For example, the masked gradients $\nabla W_n'$ are generated based on the following equation:

[Math 7]

$$\nabla W_n' = \nabla W_n \otimes H_n''$$

where $\otimes$ is the Hadamard product operator, in other words an element-wise multiplication. Thus, values of $\nabla W_n'$ will be equal to zero when the corresponding value of the Hebbian gradient mask $H_n''$ is also equal to zero.

In the operation 511 (APPLY MASKED GRADIENT), certain, but not all, of the weights of the matrix $W_n$ are for example updated based on the masked gradients $\nabla W_n'$. For example, the weights are updated based on the following equation:

[Math 8]

$$W_n = W_n - \eta \nabla W_n'$$

where $\eta$ is the learning rate.

In an operation 512 (b=B), it is determined whether the count value b is equal to the number B of batches of the dataset. If not (branch N), in an operation 513 (b=b+1 AND DECAY $p_{flip}$), the count value b is incremented. In some embodiments, also in the operation 513, the probability $p_{flip}$ used to generate the uniform random values of the matrix $U(p_{flip})$ is decayed, for example by applying the following operation:

[Math 9]

$$p_{flip} = p_{flip} * \beta$$

where $\beta$ is the decay rate, which is for example greater than 0 and less than 1, and equal in some case to between 0.90 and 0.99.

After operation 513, the method for example returns to operation 504.

Once, in operation 512, b=B because all of the batches have been processed (branch Y), in an operation 514 (e=E?), it is for example determined whether the count value e is equal to the number of epochs E to be performed on the dataset. In some cases, a single epoch is applied, and E is equal to 1. If e is not equal to E (branch N), in an operation 515, the count value e is incremented, and the method for example returns to operation 502.

Once, in operation 514, e=E because all of the epochs have been processed (branch Y), an operation 516 (PRUNING) is for example implemented. This operation for example involves processing the neural network to remove synapses for which the weights are lower than a certain threshold. If all of the synapses to a given neuron are removed, the neuron is also for example removed from the network. In this way, parts of the neural network that have no or limited impact on the output of the network are pruned, thereby reducing the size and complexity of the network. The use of the L2-norm in the loss function, as described in relation with operation 507, can help to increase the amount of pruning. Furthermore, in some cases the synapse weights are initialized at relatively low values in the operation 501, and the Hebbian mask will ensure that only a certain number of the synapse weights have the chance to become large, i.e. the correlated ones having high co-activations. Thus, the pruning step can be used at the end of training to remove the synapses having weights that have remained a low value.

In some embodiments, rather than incorporating the L2-norm within the loss function, it could be applied during a separate backpropagation step. Thus, gradients are for example backpropagated in two steps. In a first step, the loss, with no L2-norm term, is backpropagated, and the Hebbian mask is used to mask some of the gradients, as described in relation with operation 509. In a second step, the L2-norm is for example calculated, and this is then backpropagated, while retaining the gradients that have already been calculated, and summed with the masked gradients generated in the first step. Thus, according to this embodiment, all of the weights can be decayed, whether or not the corresponding synapses are connecting correlated neurons, that is neurons having relatively high co-activation. In this way, the weights of synapses that are masked by the Hebbian mask $H_n''$ will decay to zero.

According to the method of Figure 5, the network evaluation phase 503 and weight matrix update phase 508 are applied to each batch, and are thus performed multiple times during the processing of an epoch. This for example allows the gradient updates to be stochastic, thereby providing a stochastic gradient descent approach.

While in the example of Figure 5 the Hebbian matrices $H_n$ are transformed into masks in the operation 505, in alternative embodiments, it would be possible to omit this transformation. Instead, at the time that the weights are updated in the operation 511, a decision is for example made as to whether each update should be performed by comparing at that time the corresponding Hebbian value with the threshold $h_{th}$.

Furthermore, the perturbation of operation 506 could be omitted in some embodiments.

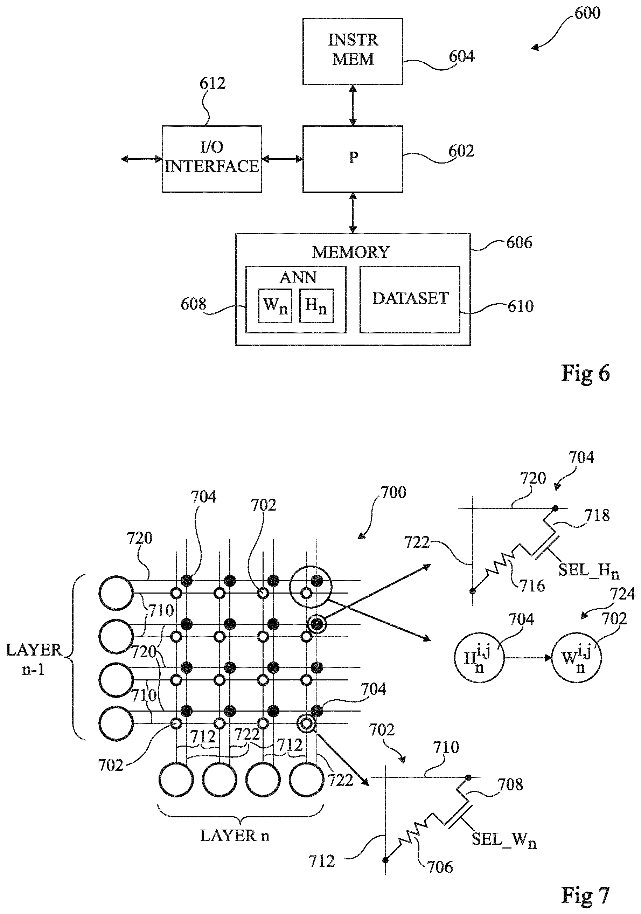

The training system 400 of Figure 4 is for example implemented by software instructions executed in a suitable computing environment, as will now be described in more detail with reference to Figure 6.

Figure 6 schematically illustrates a computing system 600 implementing the training system 400 of Figure 4 according to an example embodiment of the present disclosure.

For example, the computing system 600 comprises a processing device (P) 602 comprising one or more CPUs (Central Processing Units) under control of instructions stored in an instruction memory (INSTR MEM) 604. Alternatively, rather than CPUs, the computing system could comprise one or more NPUs (Neural Processing Units), or GPUs (Graphics Processing Units), under control of the instructions stored in the instruction memory 604. These instructions for example cause the operations of the method of Figure 5 to be implemented.

The computing system 600 also for example comprises a further memory (MEMORY) 606, which may be implemented in a same memory device as the memory 604, or in a separate memory device. The memory 606 for example stores the ANN 402 in a memory region 608, such that a computer emulation of this ANN is possible. For example, the ANN 402 is fully defined as part of a program stored by the instruction memory 604, including the definition of the structure of the ANN, i.e. the number of neurons in the input and output layers and in the hidden layers, the number of hidden layers, the activation functions applied by the neuron circuits, etc. Furthermore, the weights matrices $W_n$ of the ANN learnt during training, and the Hebbian matrices $H_n$, are for example stored in the regions 608 of the memory 606. In this way, the ANN 402 can be trained and operated within the computing environment of the computing system 600. A further memory region 610 of the memory 606 for example stores the dataset 404, although in alternative embodiments, this dataset may be stored in a remote storage system coupled to the system 600 via one or more networks. In some embodiments, the computing system 600 also comprises an input/output interface (I/O INTERFACE) 612 for communications over such networks.

Rather than being implemented in software as described in relation with Figure 6, in some embodiments the ANN 402 is implemented at least partially in hardware, as will now be described in more detail.

Figure 7 schematically illustrates a synapse network 700 providing a hardware implementation of synapses between two layers of a neural network, such as the network 402, according to an example embodiment of the present disclosure. In particular, the synapse network 700 of Figure 7 is an array of synapse circuits 702, 704 interconnecting layers n-1 (LAYER n-1) and n (LAYER n) of the neural network. For example, the layer n-1 is the input layer of the network, and the layer n is a first hidden layer of the network. In another example, the layers n-1 and n are both hidden layers, or the layer n-1 is a last hidden layer of the network, and the layer n is the output layer of the network. Such a synapse network is for example implemented between each pair of adjacent layers in the neural network.

In the example of Figure 7, the layers n-1 and n each comprise four neurons, although in alternative embodiments there could be a different number of neurons in either or both layers. The array 700 comprises a sub-array of synapse circuits 702, which each connects a corresponding neuron of the layer n-1 to a corresponding neuron of the layer n, and a sub-array of synapse circuits 704, which each connect a corresponding neuron of the layer n-1 to a corresponding neuron of the layer n. The synapse circuits 702 store the synaptic weights matrix $W_n$, while the synapse circuits 704 store the Hebbian matrix or mask $H_n$ associated with the synapses.

Each of the synapse circuits 702 for example comprises a non-volatile memory device 706 storing, in the form of a conductance $g_W$, the synapse weight $W_n^{i,j}$ associated with the synapse circuit. The memory device of each synapse circuit 702 is for example implemented by a PCM device, or other type of resistive random-access memory (ReRAM) device, such as an oxide RAM (OxRAM) device, which is based on so-called "filamentary switching". The device for example has low or negligible drift of its programmed level of conductive over time. In the case of a PCM device, the device is for example programmed with relatively high conductance/low resistance states, which are less affected by drift than the low conductance/high resistance states. The synapse circuits 702 are for example coupled at each intersection between a pre-synaptic neuron of the layer n-1 and a post-synaptic neuron of the layer n in a cross-bar fashion, as known by those skilled in the art. For example, a blow-up view in Figure 7 illustrates an example of this intersection for the synapse circuits 702, a resistive memory device 706 being coupled in series with a transistor 708 between a line 710 coupled to a corresponding pre-synaptic neuron, and a line 712 coupled to a corresponding post-synaptic neuron. The transistor 708 is for example controlled by a selection signal SEL_$\theta$ generated by a control circuit (not illustrated in Figure 4).

During the forward propagation of an input value through the neural network, each neuron of the layer n for example receives an activation vector equal to $X_{in} \cdot W$, where $X_{in}$ is the input vector from the previous layer, and W are the weights of the weights matrix $W_n$. A voltage is for example applied to each of the lines 712, which is for example coupled to the top electrode of each resistive device 706 of a column. The selection transistors 708 are then for example activated, such that a current will flow through each device 706 equal to $V \times g_W$, where V is the top electrode voltage, and $g_W$ is the conductance of the device 706. The current flowing through the line 712 will thus be the addition of the current flowing through each device 706 of the column, and the result is a weighted sum operation. A similar operation for example occurs at each neuron of each layer of the network, except in the input layer.

Each of the synapse circuits 704 for example comprises a volatile memory device 716 storing, in the form of a conductance $g_H$, the Hebbian value $H_n^{i,j}$ associated with the synapse circuit. Like the memory devices 706, the memory devices 716 are for example implemented by a PCM device, or other type of resistive random-access memory (ReRAM) device, such as an oxide RAM (OxRAM) device, and the device 716 for example has low or negligible drift of its programmed level of conductive over time. The synapse circuits 704 are for example coupled at each intersection between a pre-synaptic neuron of the layer n-1 and a post-synaptic neuron of the layer n in a cross-bar fashion. For example, a blow-up view in Figure 7 illustrates an example of this intersection for the synapse circuits 704, a resistive memory device 716 being coupled in series with a transistor 718 between a line 720 coupled to a corresponding pre-synaptic neuron, and a line 722 coupled to a corresponding post-synaptic neuron. The transistor 718 is for example controlled by a selection signal SEL_$H_n$ generated by the control circuit.

The conductance of the resistive memory elements of the synapse circuits 704 are for example used during the updating of the synapse weights $g_W$, as represented by a relation 724 presented in Figure 7.

In some embodiments, the sub-arrays of synapse circuits 702, 704 are overlaid such that the corresponding synapse circuits 702, 704 are relatively close, permitting a local updating of synaptic weights $g_W$ of the corresponding synapse circuits.

While in Figure 7 the sub-array of synapse circuits 704 has been illustrated arranged in a similar configuration to the synapse circuits 702, it will be apparent to those skilled in the art that any arrangement that permits the memory cells of the circuit to be accessed and selectively programmed could be implemented.

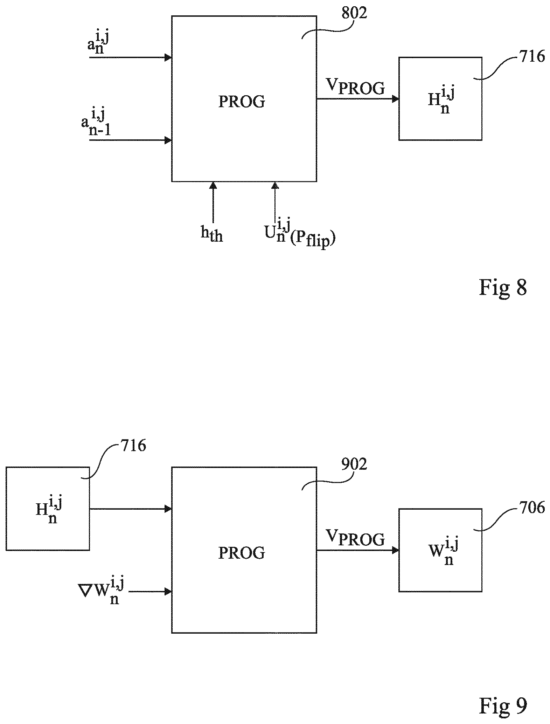

Figure 8 schematically illustrates a programing circuit (PROG) 802 for storing a value $H_n^{i,j}$ of a Hebbian matrix associated with a synapse i,j of a layer n of a neural network, according to an example embodiment of the present disclosure. The circuit 802 for example receives the outputs $a_n^{i,j}$ and $a_{n-1}^{i,j}$ from the pre-synaptic and post-synaptic neurons of the synapse i,j. In some cases, the circuit 802 also receives the threshold value $h_{th}$ and/or the uniform random value $U_n^{i,j}(p_{flip})$ associated with the synapse. The circuit 802 is for example configured to determine the co-activation of the pre-synaptic and post-synaptic neurons based on the signals $a_n^{i,j}$ and $a_{n-1}^{i,j}$, and to generate a programming voltage $V_{PROG}$ for programming the device 716 in order to store this co-activation value. In some cases, the value is a binary state, determined by comparing the co-activation with the threshold $h_{th}$, and may be perturbated based on the uniform random value $U_n^{i,j}(p_{flip})$.

Figure 9 schematically illustrates a programing circuit (PROG) 902 for storing a synaptic weight associated with a synapse i,j of a layer n of a neural network, according to an example embodiment of the present disclosure. The circuit 902 for example receives a corresponding Hebbian value $H_n^{i,j}$ read from the device 716, and also a gradient $\nabla W_n^{i,j}$ associated with the synapse i,j generated by backpropagation. The circuit 902 is for example configured to selectively apply the gradient $\nabla W_n^{i,j}$ to update the weight $W_n^{i,j}$ stored by the device 706 based on the value of the Hebbian value $H_n^{i,j}$. For example, if the weight is to be updated, the circuit 902 is configured to generate a programming voltage $V_{PROG}$ for programming the device 716 in order to store this updated weight.

As mentioned above, in some cases, the Hebbian matrices store the co-activation values, and the threshold $h_{th}$ is only applied when the weight is to be updated. In such a case, the circuit 902 also for example receives the threshold $h_{th}$, and compares the Hebbian value $H_n^{i,j}$ with this threshold in order to determine whether or not the weight update should be performed.

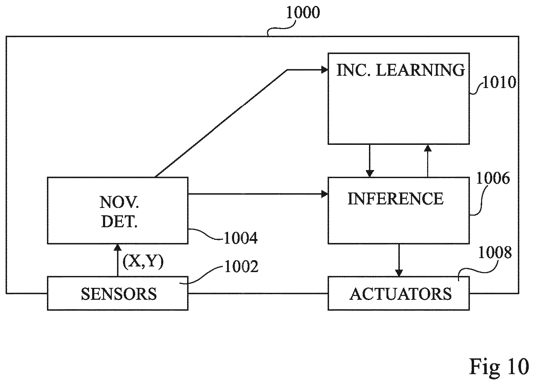

Figure 10 schematically illustrates a hardware system 1000 according to an example embodiment of the present disclosure. This system may be implemented entirely in hardware, or at least some elements may be implemented in software, for example similar to the implementation of Figure 6.

The system 1000 comprises one or more sensors (SENSORS) 1002, which for example comprise one or more image sensors, depth sensors, heat sensors, microphones, or any other type of sensor. The one or more sensors 1002 provide new stimuli data data points to a novelty detector 1004. The novelty detector 1004 is configured to detect when an input value sensed by the sensor corresponds to a new class than has not yet been learnt by the network.

If the input value does not correspond to a new class, then it is for example supplied to an inference module (INFERENCE) 1006, which for example comprises a neural network trained according to the method as described herein. In particular, the model of the network has for example been trained and heavily pruned based on the method of Figure 5, and then for example transferred to the system 1000. The inference module 1006 is configured to process the input data, for example in order to perform classification. An output of the inference module 1006 corresponding, to a predicted label is for example provided to one or more actuators (ACTUATORS) 1008, which are controlled based on the predicated label. For example, the actuators 1008 could include a robot, such as a robotic arm trained to pull up weeds, or to pick ripe fruit from a tree, or could include automatic steering or breaking systems in a vehicle, or operations of circuit, such as waking up from or entering into a sleep mode.

If the input value does correspond to a new class, then it is for example supplied to an incremental learning module (INC. LEARNING) 1010, which is for example configured to learn new classes of input data, and train the neural network implemented by the inference module 1006, based on incremental learning. For example, such training is triggered when the number of detected novel data values reaches a certain threshold. Incremental learning is described in more detail in the publication by Rebuffi, Sylvestre-Alvise, et al. entitled "icarl: Incremental classifier and representation learning.", Proceedings of the IEEE conference on Computer Vision and Pattern Recognition, 2017, and in the publication by Parisi, German I., et al. entitled "Continual lifelong learning with neural networks: A review.", Neural Networks 113 (2019)54-71.

Of course, in some embodiments the novelty detector 1004 and incremental learning module 1010 of the system 1000 could be omitted, the system for example being configured to perform only inference.

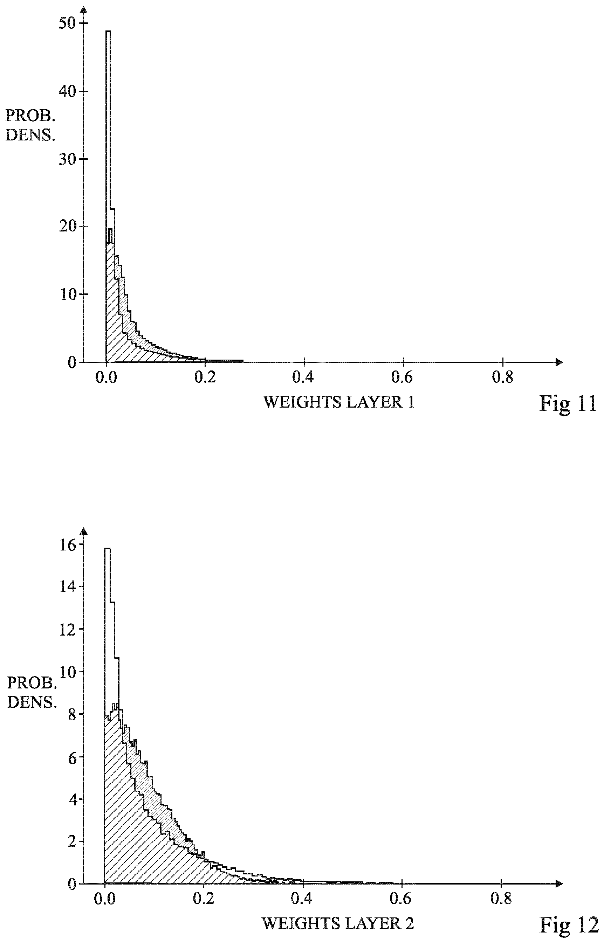

An advantage of the embodiments described herein is that the training of an artificial neural network can be performed so as to update only the weights of synapses between neurons that are relatively well correlated with each other. Other weights can thus be pruned without impacting performance of the network. This leads to a network that is relatively compact, and of relatively low complexity, thus requiring a relatively low amount of memory storage and energy consumption during inference operations. These advantages are for example of particular importance for constrained embedded targets or microprocessors, where chip area is limited. These advantages are further demonstrated by simulations, as will now be described in more detail with reference to Figures 11 to 14.

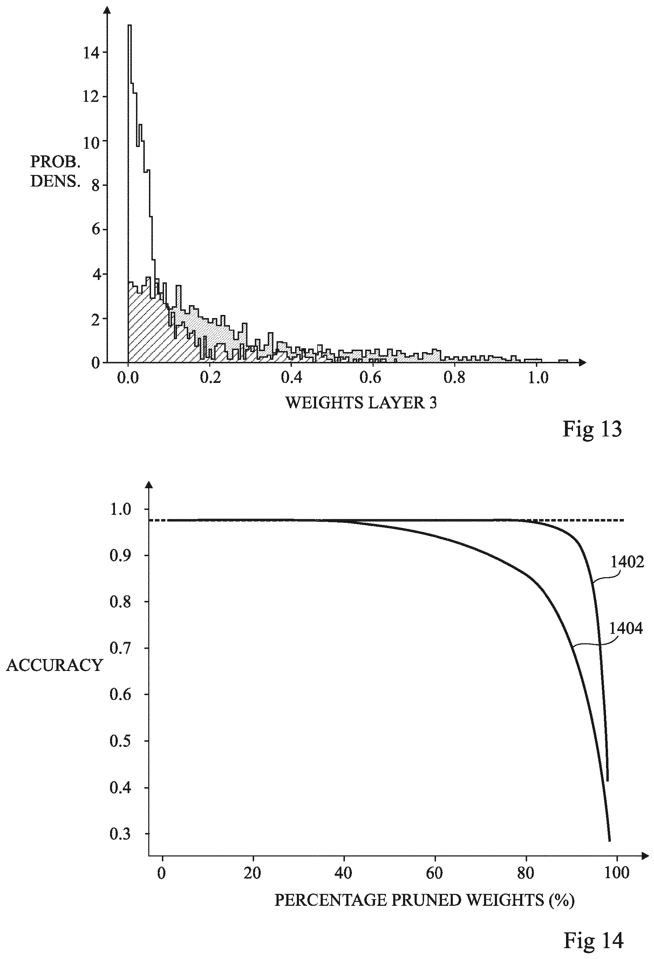

Figures 11 to 13 are graphs representing probability densities (PROB. DENS.) of weights of three layers of a neural network with the use of Hebbian matrices as described herein (non-shaded areas and lightly-shaded areas) and without the use of Hebbian matrices (shaded areas and lightly-shaded areas). In particular, Figure 11 illustrates the layer 1 weights (WEIGHTS LAYER 1), Figure 12 illustrates the layer 2 weights (WEIGHTS LAYER 2), and Figure 13 illustrates the layer 3 weights (WEIGHTS LAYER 3). These simulations were for example performed using a MNIST (Mixed National Institute of Standards and Technology) database, using a multilayer perceptron network of layer sizes 784x256x128x10, batch sizes of 128, and using an Adam optimizer, with a learning rate of 1e-3, a weight decay of 1e-3, and 20 epochs. The activation function was a Tanh function, except in the last layer, which used a sigmoid function. The loss function was a categorical cross entropy loss with softmax applied to the output layer, and L2-norm regularization used to decay weights not being updated.

It can be seen from Figures 11 to 13 that, with the use of the Hebbian matrices, there is a greater number of weights close to zero in all three layers, which implies that more extensive pruning can be applied, leading to less complex neural networks.

Figure 14 is a graph illustrating accuracy (ACCURACY) of a neural network against the percentage of pruned weights for a neural network with the use of Hebbian matrices as described herein (curve 1402) and without the use of Hebbian matrices (curve 1404). The simulation was performed using the same conditions as those of Figures 11 to 13 described above. In can be seen that when the Hebbian matrices are used, accuracy remains significantly higher for a greater percentage of pruned weights. For example, when Hebbian matrices are used, up to 80 percent of the weights can be pruned, while accuracy remains high, whereas when Hebbian matrices are not used, the accuracy starts to fall significantly from around 50 percent of pruned weights.

Furthermore, the inventor has noted that the use of Hebbian matrices as described herein tends to cause the neurons of the network to form "assemblies" of neurons, in other words relatively small subsets of neurons that respond strongly to certain classes of inputs. This provides advantages for continuous learning applications, such as the one of Figure 10, and also helps to protect the network against the risk of catastrophic forgetting.

Various embodiments and variants have been described. Those skilled in the art will understand that certain features of these embodiments can be combined and other variants will readily occur to those skilled in the art. For example, it will be apparent to those skilled in the art that the techniques described herein could be applied in other contexts, such as in a reinforcement learning system. In such a case, the function $Y = \Pi_\theta(X)$ represents the policy applied by the network in the reinforcement learning context.

Furthermore, while embodiments have been described in which the Hebbian gradient mask is applied in order to only update synapses having relative high co-activations, additionally or alternatively the Hebbian gradient mask may be used to protect these synapses from being modified in the context of continuous/incremental learning.

Indeed, in continuous and incremental learning applications, neural networks often suffer from catastrophic forgetting. As explained above, catastrophic forgetting occurs when a neural network, by adapting its synaptic weights to new classes or new examples of learned data, forgets how to classify correctly what is has previously been trained on.

The Hebbian gradient mask as described herein can be used as a protection mechanism against catastrophic forgetting, by preventing modification of synapses between neurons having high co-activation. In particular, instead of using the Hebbian gradient mask as described above to promote growth of a subset of weights in order to sparsify the model, the Hebbian gradient mask is used to suppress growth of a subset of weights in order to reduce the risk of catastrophic forgetting.

When a pair of neurons connected by a synapse have a high co-activation, it indicates that they are important for a certain task, or class label. Therefore, the synaptic weight of the synapse connecting those neurons is for example protected, using the Hebbian gradient mask, during the learning of a new task. For example, when the co-activation exceeds a specified value, the gradient calculated for that synapse is set to zero, which is the opposite to what is done when the objective is sparsification of the model. This is for example achieved by adapting the equation for the generation of the mask based on the following equation:

[Math 10]

$$H_n' = (|a_n \cdot a_{n-1}{}^T| < h_{th})$$

For example, in the hardware system 1000 of Figure 10, the Hebbian gradient mask is for example used to protect the modification of synapses associated with high co-activations during the operation of the incremental learning module 1010, following the detection, by the novelty detector 1004, of a new class to be learned.

Finally, the practical implementation of the embodiments and variants described herein is within the capabilities of those skilled in the art based on the functional description provided hereinabove.

**Claims**

1. A method comprising:

training, by a computing system (400), an artificial neural network (402) comprising a plurality of layers of neurons, the neurons of each layer being coupled to one or more neurons of one or more adjacent layers via synapses, the training method comprising:

a) forward propagating one or more first training data points through the network (402) in order to generate one or more output values;

b) during the forward propagation of the one or more first training data points, calculating, for at least a first of the synapses, a first co-activation value ( $H_n^{i,j}$ ) representing a co-activation of pre-synaptic and post-synaptic neurons of the synapse;

c) generating, for at least the first synapse, a first weight gradient ( $\nabla W_n^{i,j}$ ) by backpropagating through the network derivatives of an error value generated based on the one or more output values; and

d) selectively updating a synaptic weight of the first synapse based on the first co-activation value ( $H_n^{i,j}$ ), the synaptic weight of the first synapse being updated by applying the first weight gradient ( $\nabla W_n^{i,j}$ ); and

performing, by an inference module (1006) of a hardware system (1000) comprising one or more sensors (1002) and one or more actuators (1008), the inference module (1006) comprising the trained artificial neural network (402), classification on input data sensed by the one or more sensors to generate a predicted label; and controlling the one or more actuators (1008) based on the predicted label.

2. The method of claim 1, wherein d) comprises updating the synaptic weight only if the first co-activation value ( $H_n^{i,j}$ ) is above a threshold.

3. The method of claim 1 or 2, further comprising:

- repeating operations a), b), c) and d) a plurality of times; and
- selectively pruning the first synapse based on its synaptic weight after said repetition of the operations a), b), c) and d) the plurality of times.

4. The method of any of claims 1 to 3, further comprising calculating, for a plurality of further synapses, further co-activation values ( $H_n^{i,j}$ ), wherein the first and further co-activation values ( $H_n^{i,j}$ ) are calculated based on the following equation:

[Math 11]

$$H_n = K(a_n \cdot a_{n-1}{}^T)$$

where $a_n$ is an array of activations of the neurons of the layer n, $a_{n-1}$ is the array of activations of the neurons of the layer n-1, and K is a function resulting in a positive result.

5. The method of any of claims 1 to 3, further comprising calculating, for a plurality of further synapses, further co-activation values ( $H_n^{i,j}$ ), wherein the first and further co-activation values ( $H_n^{i,j}$ ) are calculated based on the following equation:

[Math 12]

$$H_n = |a_n \cdot a_{n-1}{}^T|$$

where $a_n$ is an array of activations of the neurons of the layer n, and $a_{n-1}$ is the array of activations of the neurons of the layer n-1.

6. The method of claim 4 or 5, further comprising:

  e) generating, for the plurality of further synapses, further weight gradients ( $\nabla W_n^{i,j}$ ) by backpropagating through the network derivatives of the error value generated based on the one or more output values; and
  f) selectively updating synaptic weights of the plurality of further synapses based on the further co-activation values ( $H_n^{i,j}$ ).

7. The method of claim 5, further comprising converting the first and further co-activation values ( $H_n^{i,j}$ ) into a Hebbian gradient mask by comparing each value with one or more thresholds ($h_{th}$), wherein selectively updating the synaptic weight of the first and further synapses comprises updating each synaptic weight if the corresponding Hebbian gradient mask value has a first value, and not updating each synaptic weight if the corresponding Hebbian gradient mask value has a second value different to the first value.

8. The method of claim 7, wherein the Hebbian gradient mask is a binary mask generated based on the following equation:

[Math 13]

$$H_n' = (K(a_n \cdot a_{n-1}{}^T) > h_{th})$$

where K is for example a function resulting in a positive result, and $h_{th}$ is the threshold.

9. The method of claim 7, wherein the Hebbian gradient mask is a ternary mask, and selectively updating the synaptic weight of the first and further synapses further comprises updating each synaptic weight based on a reversed value of the gradient if the corresponding Hebbian gradient mask value has a third value different to the first and second values.

10. The method of claim 9, wherein the Hebbian ternary mask $H_n'$ is generated based on the following equation:

[Math 14]

$$\boldsymbol{H_n' = (a_n \cdot a_{n-1}{}^T > h_{th1}) - (a_n \cdot a_{n-1}{}^T < h_{th2})}$$

where $h_{th1}$ and $h_{th2}$ are the thresholds, with $h_{th1} > h_{th2}$.

11. The method of any of claims 7 to 10, further comprising perturbing the Hebbian gradient mask prior to selectively updating the synaptic weights of the first and further synapses.

12. The method of claim 11, wherein perturbing the Hebbian gradient mask comprises subtracting, from the Hebbian gradient mask, a matrix of uniform random values according to the following equation:

[Math 15]

$$H_n'' = \left| H_n' - U(p_{flip}) \right|$$

where $U(p_{flip})$ is the matrix of uniform random values, and $p_{flip}$ is the probability of each of the uniform random values being at 1.

13. The method of any of claims 1 to 12, further comprising generating the error value based on the Euclidean norm of the synaptic weights of the matrix.

14. The method of claim 1, wherein d) comprises updating the synaptic weight only if the first co-activation value ( $H_n^{i,j}$ ) is below a threshold.

**15.** A system comprising a computing system (400) configured to train an artificial neural network according to any of claims 1 to 14 and a hardware system (1000) comprising one or more sensors (1002), one or more actuators (1008), and an inference module (1006) comprising the trained artificial neural network (402) of any of claims 1 to 14, the inference module being configured to:

- perform classification on input data sensed by the one or more sensors to generate a predicted label; and
- the hardware system being configured to control the one or more actuators (1008) based on the predicted label.

**Patentansprüche**

**1.** Ein Verfahren, dass Folgendes aufweist:

Trainieren, durch ein Rechensystem (400), eines künstlichen neuronalen Netzwerks (402) aufweisend eine Vielzahl von Schichten von Neuronen, wobei die Neuronen jeder Schicht mit einem oder mehreren Neuronen einer oder mehrerer benachbarten Schichten über Synapsen gekoppelt sind, wobei das Trainingsverfahren Folgendes aufweist:

a) vorwärts weiterleiten von einem oder mehreren ersten Trainingsdatenpunkten durch das Netzwerk (402), um einen oder mehrere Ausgangswerte zu generieren;
b) während des vorwärts Weiterleitens der einen oder mehreren ersten Trainingsdatenpunkte, Berechnen, für wenigstens eine erste Synapse, eines ersten Co-Aktivierungs-Werts ( $H_n^{i,j}$ ), der eine Co-Aktivierung repräsentiert, und zwar von prä-synaptischen und post-synaptischen Neuronen der Synapse;

c) Generieren, für wenigstens die erste Synapse, eines ersten Gewichtungsgradienten ( $\nabla W_n^{i,j}$ ), und zwar durch rückwärts Weiterleiten durch die Netzwerk-Derivate eines Fehlerwertes, der generiert wird basierend auf dem einen oder den mehreren Ausganswerten; und
d) selektives Aktualisieren einer synaptischen Gewichtung der ersten Synapse basierend auf dem ersten Co-Aktivierungs-Wert ( $H_n^{i,j}$ ), wobei die synaptische Gewichtung der ersten Synapse aktualisiert wird durch Anwenden des ersten Gewichtungsgradienten ( $\nabla W_n^{i,j}$ ); und

Durchführen, durch ein Inferenz-Modul (1006) eines Hardwaresystems (1000), das einen oder mehrere Sensoren (1002) und einen oder mehrere Aktuatoren (1008) aufweist, wobei das Inferenz-Modul (1006) das trainierte künstliche neuronale Netzwerk (402) aufweist, und zwar Durchführen von Klassifizierung von Eingangsdaten, die durch den einen oder die mehreren Sensoren abgetastet wurden um ein Vorhersage-Label zu generieren; und
Steuern des einen oder der mehreren Aktuatoren (1008) basierend auf dem Vorhersage-Label.

**2.** Das Verfahren nach Anspruch 1, wobei d) Aktualisieren der synaptischen Gewichtung aufweist genau dann, wenn der erste Co-Aktivierungs-Wert ( $H_n^{i,j}$ ) über einem Schwellenwert ist.

**3.** Das Verfahren nach Anspruch 1 oder 2, das ferner Folgendes aufweist:

- Wiederholen der Vorgänge a), b), c) und d) eine Vielzahl von Malen; und
- selektives Beschneiden der ersten Synapse basierend auf ihrer synaptischen Gewichtung nach der Wiederholung der Vorgänge a), b), c) und d) die Vielzahl von Malen.

**4.** Das Verfahren nach einem der Ansprüche 1 bis 3, ferner aufweisend Berechnen, für eine Vielzahl von weiteren Synapsen, weiterer Co-Aktivierungs-Werte ( $H_n^{i,j}$ ), wobei der erste und die weiteren Co-Aktivierungs-Werte ( $H_n^{i,j}$ ) berechnet werden basierend auf der folgenden Gleichung:

[Math 11]

$$H_n = K(a_n \cdot a_{n-1}^T)$$

wobei $a_n$ ein Array von Aktivierungen der Neuronen der Schicht $n$ ist, $a_{n-1}$ ein Array von Aktivierungen der Neuronen der Schicht n - 1 ist und K eine Funktion ist, die eine positives Ergebnis liefert.

5. Das Verfahren nach einem der Ansprüche 1 bis 3, ferner aufweisend Berechnen, für eine Vielzahl von weiteren Synapsen, weiterer Co-Aktivierungs-Werte ($H_n^{i,j}$), wobei der erste und die weiteren Co-Aktivierungs-Werte ($H_n^{i,j}$) berechnet werden basierend auf der folgenden Gleichung:

[Math 12]

$$H_n = |a_n \cdot a_{n-1}^T|$$

wobei $a_n$ ein Array von Aktivierungen der Neuronen der Schicht $n$ ist und $a_{n-1}$ ein Array von Aktivierungen der Neuronen der Schicht n - 1 ist.

6. Das Verfahren nach einem der Ansprüche 4 oder 5, ferner aufweisend:

   e) Generieren, für die Vielzahl von weiteren Synapsen, weitere Gewichtungsgradienten ($\nabla W_n^{i,j}$), und zwar durch rückwärts Weiterleiten durch die Netzwerk-Derivate des Fehlerwertes, der generiert wird basierend auf dem einen oder den mehreren Ausganswerten; und
   f) selektives Aktualisieren von synaptischen Gewichtungen der Vielzahl von weiteren Synapsen basierend auf den weiteren Co-Aktivierungs-Werten ($H_n^{i,j}$).

7. Das Verfahren nach Anspruch 5, ferner aufweisend Konvertieren des ersten und der weiteren Co-Aktivierungs-Werte ($H_n^{i,j}$) in eine Hebb-Gradienten-Maske durch Vergleichen jedes Wertes mit einem oder mehreren Schwellenwerten ($h_{th}$), wobei selektives Aktualisieren der synaptischen Gewichtung der ersten und der weiteren Synapsen Aktualisieren aufweist jeder synaptischen Gewichtung, wenn der entsprechende Wert der Hebb-Gradienten-Maske einen ersten Wert hat, und nicht Aktualisieren jeder synaptischen Gewichtung aufweist, wenn der entsprechende Wert der Hebb-Gradienten-Maske einen zweiten Wert hat, der verschieden von dem ersten Wert ist.

8. Das Verfahren nach Anspruch 7, wobei die Hebb-Gradienten-Maske eine binäre Maske ist, die generiert wird basierend auf folgender Gleichung:

[Math 13]

$$H'_n = (K(a_n \cdot a_{n-1}^T) > h_{th})$$

wobei $K$ beispielsweise eine Funktion ist, die eine positives Ergebnis liefert und $h_{th}$ der Schwellenwert ist.

9. Das Verfahren nach Anspruch 7, wobei die Hebb-Gradienten-Maske eine ternäre Maske ist, und selektives Aktualisieren der synaptischen Gewichtung der ersten und der weiteren Synapsen Aktualisieren aufweist jeder synaptischen Gewichtung basierend auf einem umgekehrten Wert des Gradienten, wenn der entsprechende Wert der Hebb-Gradienten-Maske einen dritten Wert hat, der verschieden von dem ersten und dem zweiten Wert ist.

10. Das Verfahren nach Anspruch 9, wobei die Hebb-ternäre-Maske $H'_n$ basierend auf folgender Gleichung generiert wird:

[Math 14]

$$H'_n = (a_n \cdot a_{n-1}^T > h_{th1}) - (a_n \cdot a_{n-1}^T > h_{th2})$$

wobei $h_{th1}$ und $h_{th2}$ Schwellenwerte sind und $h_{th1} > h_{th2}$.

**11.** Das Verfahren nach einem der Ansprüche 7 bis 10, ferner aufweisend Durchmischen der Hebb-Gradienten-Maske vor selektivem Aktualisieren der synaptischen Gewichtungen der ersten und der weiteren Synapsen.

**12.** Das Verfahren nach Anspruch 11, wobei Durchmischen der Hebb-Gradienten-Maske Subtrahieren aufweist, von der der Hebb-Gradienten-Maske, und zwar einer Matrix aus einheitlichen Zufallswerten nach der folgenden Gleichung:

[Math 15]

$$H''_n = \left| H'_n - U(p_{flip}) \right|$$

wobei $U(p_{flip})$ die Matrix der einheitlichen Zufallswerte ist, und $p_{flip}$ die Wahrscheinlichkeit jedes der einheitlichen Zufallswerte 1 zu sein.

**13.** Das Verfahren nach einem der Ansprüche 1 bis 12, ferner aufweisend Generieren des Fehlerwerts basierend auf der euklidischen Norm der synaptischen Gewichtungen der Matrix.

**14.** Das Verfahren nach Anspruch 1, wobei (d) Aktualisieren der synaptischen Gewichtungen aufweist, genau dann, wenn der erste Co-Aktivierungs-Wert ( $H_n^{i,j}$ ) unter einem Schwellenwert ist.

**15.** Ein System, das ein Rechensystem (400) aufweist, das konfiguriert ist ein künstliches neuronales Netzwerk nach einem der Ansprüche 1 bis 14 zu trainieren, und ein Hardware-System (1000) aufweisend einen oder mehrere Sensoren (1002) und einen oder mehrere Aktuatoren (1008) und ein Inferenz-Modul (1006) das trainierte künstliche neuronale Netzwerk (402) nach einem der Ansprüche 1 bis 14 aufweist, wobei das Inferenz-Modul konfiguriert ist zum:

- Durchführen von Klassifizierung von Eingangsdaten, die durch den einen oder die mehreren Sensoren abgetastet wurden um ein Vorhersage-Label zu generieren; und
- wobei das Hardware-System konfiguriert ist zum Steuern der einen oder mehrere Aktuatoren (1008) basierend auf dem Vorhersage-Label.

**Revendications**

**1.** Procédé comprenant :

l'apprentissage, par un système informatique (400), d'un réseau neuronal artificiel (402) comprenant une pluralité de couches de neurones, les neurones de chaque couche étant reliés à un ou plusieurs neurones d'une ou de plusieurs couches adjacentes par l'intermédiaire de synapses, le procédé d'apprentissage comprenant :

a) la propagation vers l'avant d'un ou de plusieurs premiers points de données d'apprentissage à travers le réseau (402) afin de générer une ou plusieurs valeurs de sortie ;
b) pendant la propagation vers l'avant des un ou plusieurs premiers points de données d'apprentissage, le calcul, pour au moins une première des synapses, d'une première valeur de co-activation ( $H_n^{i,j}$ ) représentant une co-activation de neurones pré-synaptiques et post-synaptiques de la synapse ;

c) la génération, pour au moins la première synapse, d'un premier gradient de poids ( $\nabla W_n^{i,j}$ ) en rétro-propageant à travers le réseau des dérivées d'une valeur d'erreur générée sur la base d'une ou de plusieurs valeurs de sortie ; et

d) la mise à jour sélective d'un poids synaptique de la première synapse sur la base de la première valeur de co-activation ( $H_n^{i,j}$ ), le poids synaptique de la première synapse étant mis à jour en appliquant le premier gradient de poids ( $\nabla W_n^{i,j}$ ) ; et

la mise en œuvre, par un module d'inférence (1006) d'un système matériel (1000) comprenant un ou plusieurs capteurs (1002) et un ou plusieurs actionneurs (1008), le module d'inférence (1006) comprenant le réseau neuronal artificiel (402), d'une classification de données d'entrée détectées par les un ou plusieurs capteurs pour générer une étiquette prédite ; et
la commande des un ou plusieurs actionneurs (1008) sur la base de l'étiquette prédite.

2. Procédé selon la revendication 1, dans lequel d) comprend la mise à jour du poids synaptique uniquement si la première valeur de co-activation ( $H_n^{i,j}$ ) est supérieure à un seuil.

3. Procédé selon la revendication 1 ou 2, comprenant en outre :

 - la répétition des opérations a), b), c) et d) plusieurs fois ; et
 - l'élagage sélectif de la première synapse sur la base de son poids synaptique après ladite répétition des opérations a), b), c) et d) plusieurs fois.

4. Procédé selon l'une quelconque des revendications 1 à 3, comprenant en outre le calcul, pour une pluralité de synapses suivantes, d'autres valeurs de co-activation ( $H_n^{i,j}$ ), dans lequel les première et autres valeurs de co-activation ( $H_n^{i,j}$ ) sont calculées sur la base de l'équation suivante :

[Math 11]

$$H_n = K(a_n \cdot a_{n-1}{}^T)$$

où $a_n$ est un tableau d'activations des neurones de la couche n, $a_{n-1}$ est le tableau d'activations des neurones de la couche n-1, et K est une fonction résultant en un résultat positif.

5. Procédé selon l'une quelconque des revendications 1 à 3, comprenant en outre le calcul, pour une pluralité de synapses suivantes, d'autres valeurs de co-activation ( $H_n^{i,j}$ ), dans lequel les première et autres valeurs de co-activation ( $H_n^{i,j}$ ), sont calculées sur la base de l'équation suivante :

[Math 12]

$$H_n = |a_n \cdot a_{n-1}{}^T|$$

où $a_n$ est un tableau d'activations des neurones de la couche n, $a_{n-1}$ est le tableau d'activations des neurones de la couche n-1.

6. Procédé selon la revendication 4 ou 5, comprenant en outre :

 e) la génération, pour la pluralité de synapses suivantes, d'autres gradients de poids ( $\nabla W_n^{i,j}$ ) en rétro-propageant à travers le réseau des dérivées de la valeur d'erreur générée sur la base des une ou plusieurs valeurs de sortie ; et
 f) la mise à jour sélective de poids synaptiques de la pluralité de synapses suivantes sur la base des autres valeurs de co-activation ( $H_n^{i,j}$ ).

7. Procédé selon la revendication 5, comprenant en outre la conversion des première et autres valeurs de co-activation (

$H_n^{i,j}$) en un masque de gradient De Hebb en comparant chaque valeur à un ou plusieurs seuils ($h_{th}$), dans lequel la mise à jour sélective du poids synaptique de la première synapse et des synapses suivantes comprend la mise à jour de chaque poids synaptique si la valeur de masque de gradient De Hebb correspondante a une première valeur, et la non-mise à jour de chaque poids synaptique si la valeur de masque de gradient De Hebb correspondante a une deuxième valeur différente de la première valeur.

8. Procédé selon la revendication 7, dans lequel le masque de gradient de Hebb est un masque binaire généré sur la base de l'équation suivante :

[Math 13]

$$H_n' = (K(a_n \cdot a_{n-1}{}^T) > h_{th})$$

où K est par exemple une fonction aboutissant à un résultat positif, et $h_{th}$ est le seuil.

9. Procédé selon la revendication 7, dans lequel le masque de gradient De Hebb est un masque ternaire, et la mise à jour sélective du poids synaptique de la première synapse et des synapses suivantes comprend en outre la mise à jour de chaque poids synaptique sur la base d'une valeur inversée du gradient si la valeur de masque de gradient De Hebb correspondante a une troisième valeur différente des première et deuxième valeurs.

10. Procédé selon la revendication 9, dans lequel le masque ternaire de Hebb $H_n'$ est généré sur la base de l'équation suivante :

[Math 14]

$$H_n' = (a_n \cdot a_{n-1}{}^T > h_{th1}) - (a_n \cdot a_{n-1}{}^T < h_{th2})$$

où $h_{th1}$ et $h_{th2}$ sont les seuils, avec $h_{th1} > h_{th2}$.

11. Procédé selon l'une quelconque des revendications 7 à 10, comprenant en outre la perturbation du masque de gradient de Hebb avant la mise à jour sélective des poids synaptiques de la première synapse et des synapses suivantes.

12. Procédé selon la revendication 11, dans lequel la perturbation du masque de gradient de Hebb comprend la soustraction, du masque de gradient de Hebb, d'une matrice de valeurs aléatoires uniformes selon l'équation suivante :

[Math 15]

$$H_n'' = \left| H_n' - U(p_{flip}) \right|$$

où $U(p_{flip})$ est la matrice de valeurs aléatoires uniformes, et $p_{flip}$ est la probabilité que chacune des valeurs aléatoires uniformes soit à 1.

13. Procédé selon l'une quelconque des revendications 1 à 12, comprenant en outre la génération de la valeur d'erreur sur la base de la norme euclidienne des poids synaptiques de la matrice.

14. Procédé selon la revendication 1, dans lequel d) comprend la mise à jour du poids synaptique uniquement si la première valeur de co-activation ( $H_n^{i,j}$ ) est inférieure à un seuil.

15. Système comprenant un système informatique (400) configuré pour entraîner un réseau neuronal artificiel selon l'une quelconque des revendications 1 à 14 et un système matériel (1000) comprenant un ou plusieurs capteurs (1002) et un ou plusieurs actionneurs (1008), et un module d'inférence (1006) comprenant le réseau neuronal artificiel entraîné (402) selon l'une quelconque des revendications 1 à 14, le module d'inférence étant configuré pour :

- effectuer une classification de données d'entrée détectées par les un ou plusieurs capteurs pour générer une étiquette prédite ; et
- le système matériel étant configuré pour commander les un ou plusieurs actionneurs (1008) sur la base de l'étiquette prédite.

Fig 1

Fig 2

Fig 3

Fig 4

INITIALIZE $W_n$, $e = 1$ — 501

$b = 1$ — 502

503

FORWARD PROPAGATION AND GENERATION OF CO-ACTIVATION MATRICES $H_n$ — 504

RECTIFY EACH MATRIX $H_n$ WITH $h_{th}$ — 505

PERTURB EACH MATRIX $H_n'$ — 506

CALCULATE LOSS — 507

BACKPROPAGATE LOSS — 508

509

MASK $\nabla W$ WITH $H_n''$ — 510

APPLY MASKED GRADIENT — 511

$b = b + 1$ AND DECAY $P_{flip}$ — 513

$b = B$ ? — 512   N

Y

$e = e + 1$ — 515   N   $e = E$ ? — 514   Y   PRUNING — 516

Fig 5

Fig 6

Fig 7

Fig 8

Fig 9

1000

INC. LEARNING
1010

NOV.
DET.
1004

INFERENCE
1006

(X,Y)
1002

SENSORS

ACTUATORS
1008

Fig 10

Fig 11

Fig 12

Fig 13

Fig 14

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Non-patent literature cited in the description**

- **WOOD R J et al.** A NEURAL NETWORK THAT USES A HEBBIAN/ BACKPROPAGATION HYBRID LEARNING RULE. *PROCEEDINGS OF THE INTERNATIONAL JOINT CONFERENCE ON NEURAL NETWORKS. (IJCNN). BALTIMORE*, 07 June 1992
- PROCEEDINGS OF THE INTERNATIONAL JOINT CONFERENCE ON NEURAL NETWORKS, NEW YORK. IEEE, 07 June 1992, vol. 3, 863-868
- **REBUFFI, SYLVESTRE-ALVISE et al.** icarl: Incremental classifier and representation learning. *Proceedings of the IEEE conference on Computer Vision and Pattern Recognition*, 2017
- Continual lifelong learning with neural networks: A review. **PARISI, GERMAN I. et al.** Neural Networks. 2019, vol. 113, 54-71